# EUROPÄISCHE PATENTSCHRIFT

(11) **EP 2 436 284 B1**
(45) Veröffentlichungstag und Bekanntmachung des Hinweises auf die Patenterteilung: **13.11.2013**
(21) Anmeldenummer: 11182272.2
(22) Anmeldetag: 22.09.2011
(51) Int. Cl.: A47B 47/00, F16B 12/42

(54) **Plattenbefestigung für ein Möbelstück und Möbelstück mit einer derartigen Plattenbefestigung**
Panel fixing for furniture and furniture with such a panel fixing
Fixation de plaques pour un meuble et meuble doté d'une telle fixation de plaques

(30) Priorität: 01.10.2010 DE 102010041850
(43) Veröffentlichungstag der Anmeldung: 04.04.2012
(73) Patentinhaber: Dauphin Entwicklungs- u. Beteiligungs GmbH, 91217 Hersbruck (DE)
(72) Erfinder: Heuer, André, 32683 Barntrup (DE); Heiming, Mario, 31863 Coppenbrügge (DE); Nockemann, Markus, 32839 Steinheim (DE); Temme, Nadine, 37671 Höxter (DE); Ballendat, Martin, 5280 Braunau (AT)
(74) Vertreter: Rau, Schneck & Hübner

(56) Entgegenhaltungen:
- EP-A2- 1 044 633
- CH-B1- 699 732
- DE-A1- 3 610 232
- DE-U1- 29 617 989

## Beschreibung

Die Erfindung betrifft eine Plattenbefestigung für ein Möbelstück sowie ein Möbelstück mit einer derartigen Plattenbefestigung.

Es sind Möbel bekannt, die eine beispielsweise aus Stangen oder Rohren gebildete Rahmenstruktur aufweisen, in die Platten, insbesondere Paneelen oder Glasplatten, eingelegt sind. Eine derartige Befestigung durch Einlegen ist nicht sicher, so dass die Platten insbesondere bei einer Krafteinwirkung quer zur Plattenebene aus dem Rahmen gedrückt werden können. Eine zusätzliche Sicherung der Platten an dem Rahmen beispielsweise mittels Klammern oder Halteelementen beeinträchtigt die ästhetische Erscheinung des Möbelstücks.

Möbelsysteme mit zusätzlichen Sicherungen sind beispielsweise aus der CH 699 732 B 1, der DE 36 10 232 A1, der EP 1 044 633 A2 und der DE 296 17 989 U1 bekannt.

Der Erfindung liegt die Aufgabe zu Grunde, eine Plattenbefestigung für ein Möbelstück bereitzustellen, die eine sichere Befestigung der Platte und eine ästhetisch unbeeinträchtigte Ausführung eines Möbelstücks mit einer derartigen Plattenbefestigung ermöglicht.

Die Aufgabe wird durch die Merkmale des Anspruchs 1 gelöst. Der Kern der Erfindung besteht darin, dass in einer von einer Stirnseite einer Platte und sich in die Platte erstreckende Ausnehmung mindestens ein Befestigungs-Element zumindest abschnittsweise darin angeordnet ist. Die Platte weist eine Innenseite und eine der Innenseite gegenüberliegende Außenseite auf, wobei die Innenseite und die Außenseite durch die Stirnseite miteinander verbunden sind. Dadurch, dass die Ausnehmung sich von der Stirnseite in das Platteninnere erstreckt, ist das in der Ausnehmung angeordnete Befestigungs-Element versteckt, d. h. in einem eingesetzten Zustand der Platte an einem Möbelstück nicht sichtbar angeordnet. In dem eingesetzten Zustand der Platte an einem Rahmen des Möbelstücks liegt die Platte mit der mindestens einen Stirnseite an dem Rahmen des Möbelstücks an. Entsprechend liegt auch ein außerhalb der Ausnehmung angeordneter Abschnitt des Befestigungs-Elements an dem Rahmen des Möbelstücks an und ermöglicht somit eine zusätzliche Sicherung der Platte an dem Möbelstück. Eine Befestigung der Platte, die beispielsweise ausschließlich über eine entsprechend geformte Kontur der mindestens einen Stirnseite - also ohne Befestigungs-Element - an dem Rahmen ermöglicht wird, ist durch das zusätzliche Befestigungs-Element verbessert. Das Befestigungs-Element ist in dem eingesetzten Zustand der Platte in dem Möbelstück nicht sichtbar und beeinträchtigt daher die ästhetische Ausführung des Möbelstücks nicht. Entlang der Stirnseite können auch mehrere Ausnehmungen vorgesehen sein, in welchen jeweils ein Befestigungs-Element verankert sein kann. Dadurch ist die Haltekraft der Plattenbefestigung in dem Möbelstück zusätzlich erhöht. Bei einer beispielsweise rechteckigen Platte sind die Ausnehmungen und damit die Befestigungs-Elemente insbesondere an den beiden gegenüberliegenden langen Stirnseiten vorgesehen. Es ist auch möglich, an allen Stirnseiten der Platte Ausnehmungen und Befestigungs-Elemente vorzusehen. Dadurch, dass das mindestens eine Befestigungs-Element ein Anlage-Element zum flächigen Anliegen an dem Möbelstück aufweist, ist eine verbesserte Halterung der Platte an dem Möbelstück ermöglicht.

Eine Plattenbefestigung nach Anspruch 2 ermöglicht einerseits ein einfaches Einsetzen der Plattenbefestigung in das Möbelstück, da ein Feder-Element bei Einwirken einer Kraft in der Feder-Längs-Richtung wie beispielsweise beim Anliegen des Befestigungs-Elements an dem Rahmen des Möbelstücks zusammengedrückt werden kann und in dem eingesetzten Zustand der Platte eine Federdruckkraft auf dem Rahmen derart ausübt, dass die Platte sicher an dem Möbelstück gehalten ist. Besonders vorteilhaft ist daher die Verwendung einer Spiralfeder, die vorzugsweise aus einem Federstahl hergestellt ist. Aus Kostengründen und insbesondere auch aus Gewichtsgründen kann das Feder-Element auch aus einem Kunststoff hergestellt sein.

Die Anordnung des Befestigungs-Elements in der Plattenbefestigung nach Anspruch 3 garantiert eine ausreichende elastische Federkraft auf den Rahmen des Möbelstücks, wenn die Platte eingesetzt ist. Der abschnittsweise außerhalb der Ausnehmung angeordnete Teil des Befestigungs-Elements wird unter Kompression des Feder-Elements in die Ausnehmung derart eingedrückt, dass das Befestigungs-Element im eingesetzten Zustand der Platte im Rahmen bündig mit der Stirnseite der Platte abschließt.

Eine Plattenbefestigung nach Anspruch 4 gewährleistet, dass das Befestigungs-Element sicher in der Ausnehmung in der Platte verankert ist. Insbesondere bei der Anbringung von Platten in einer vertikalen Anordnung an einem Möbelstück wird dadurch vermieden, dass das Befestigungs-Element aus der Ausnehmung heraus fällt.

Bei einer Plattenbefestigung nach Anspruch 5 ist die Herstellung des Befestigungs-Elements vereinfacht und damit kostenreduziert. Insbesondere ist das Befestigungs-Element dreiteilig ausgeführt mit dem in der Ausnehmung zu verankernden Verankerungs-Element, mit dem an dem Möbelstück flächig anlegbaren Anlage-Element und mit dem zwischen dem Verankerungs-Element und dem Anlage-Element anzuordnenden FederElement. Insbesondere ist es möglich, das Verankerungs-Element und das Anlage-Element derart zu gestalten, dass diese derart miteinander verbindbar sind, dass einerseits das Feder-Element zwischen den beiden Elementen gehalten ist und andererseits eine Verlagerung der beiden Elemente zueinander möglich ist. Die Verbindung des Verankerungs-Elements und des Anlage-Elements kann insbesondere derart erfolgen, dass bei einer Krafteinwirkung auf das Anlage-Element dieses zu dem Verankerungs-Element hin verlagert wird, so dass das Feder-Element komprimiert wird. Dies kann beispielsweise dadurch erfolgen, dass entweder das Anlage-Element oder das Verankerungs-Element einen zentralen Steg aufweisen, der durch das Feder-Element entlang der Feder-Längs-Achse hindurchgeführt ist und mit dem Verankerungs-Element bzw. dem Anlage-Element verbunden ist. Dabei ist eine maximale Entfernung des Anlage-Elements zu dem Verankerungs-Element beispielsweise durch die Länge des unbelasteten, entspannten Feder-Elements vorgegeben und dadurch gesichert, dass der Steg des einen Elements mittels eines Anschlags an dem jeweils anderen Element gehalten ist. Gleichzeitig ist eine Kompression des Feder-Elements möglich, in dem der Steg des einen Elements in dem jeweils korrespondierenden Element entlang der Feder-Längs-Achse verlagerbar ist.

Bei einer Plattenbefestigung nach Anspruch 6 ermöglicht eine verbesserte Verankerung des Befestigungs-Elements, insbesondere des Verankerungs-Elements, in der Ausnehmung. Die Ausnehmung ist vorzugsweise als zylindrische Bohrung, insbesondere als Sacklochbohrung ausgeführt, wobei der Verankerungs-Abschnitt einen reduzierten Durchmesser aufweist. Der Verankerungs-Abschnitt ist an einem einer an der Stirnfläche angeordneten Öffnung der Ausnehmung maximal beabstandet. Dadurch ist es möglich, dass das Befestigungs-Element, das im Bereich des Feder-Elements einen maximalen Außendurchmesser aufweist, im montierten Zustand in der Ausnehmung einerseits betätigbar, d. h. das Federelement zusammengedrückt und wieder entspannt werden kann, und andererseits eine feste Verankerung in dem Verankerungs-Abschnitt ermöglicht ist. Es ist auch möglich, die Ausnehmung als eine zylindrische Bohrung mit im Wesentlichen einheitlichen Innendurchmesser auszuführen, wobei in diesem Fall das Feder-Element einen Außendurchmesser aufweist, der kleiner ist als der Innendurchmesser der Ausnehmung. Es ist insbesondere möglich, das Anlage-Element mit einem Führungs-Element derart auszuführen, dass das Führungs-Element eine geführte Verlagerung des Anlage-Elements innerhalb der Ausnehmung während einer Betätigung des Feder-Elements ermöglicht. Dazu kann das Führungs-Element einen an einen Innendurchmesser eines Führungs-Abschnitts der Ausnehmung angepassten Außendurchmesser aufweisen. Insbesondere kann der Führungs-Abschnitt der Ausnehmung als Passbohrung ausgeführt sein.

Eine Ausführung des Verankerungs-Abschnitts nach Anspruch 7 ermöglicht eine unaufwändige und damit kostengünstige Herstellung sowie Montage der Plattenbefestigung. Der Durchmesser der Passbohrung des Verankerungs-Abschnitts kann identisch mit dem Durchmesser des FührungsAbschnitts sein.

Eine Plattenbefestigung nach Anspruch 8 ermöglicht die Verlagerung des Befestigungs-Elements entlang der Ausnehmung, indem das FederElement zusammengedrückt oder entspannt wird. Entsprechend wird das Anlage-Element entlang der Ausnehmung verlagert. Der Verlagerungs-Abschnitt ist zwischen dem Führungs-Abschnitt und dem Verankerungs-Abschnitt der Ausnehmung angeordnet. Falls der Führungsabschnitt und der Verankerungs-Abschnitt als identische Passbohrungen ausgeführt sind, weist entsprechend auch der Verlagerungs-Abschnitt einen Außendurchmesser mit identischem Passmaß auf. In diesem Fall ist ein Außendurchmesser des Feder-Elements kleiner als der Innendurchmesser des Verlagerungs-Abschnitts. Für den Fall, dass das Feder-Element einen gegenüber dem Verankerungs-Element vergrößerten Außendurchmesser aufweist, ist der Innendurchmesser des Verlagerungs-Abschnitts entsprechend größer als der Innendurchmesser des Verankerungs-Abschnitts der Ausnehmung. Entsprechend ist dann der Innendurchmesser des Führungs-Abschnitts gegenüber dem des Verlagerungs-Abschnitts ebenfalls vergrößert, so dass die Ausnehmung als stufenweise abgesetzte Bohrung ausgeführt ist.

Eine Plattenbefestigung nach den Ansprüchen 9 oder 10 ermöglicht eine bezogen auf eine Mittel-Längs-Achse eines Profil-Elements des Rahmens des Möbelstücks außermittige Anlage des Befestigungs-Elements. Dadurch weist die Plattenbefestigung bezüglich einer Beanspruchung quer zur Plattenebene und insbesondere der Innenseite der Platte eine höhere Stabilität der Befestigung gegenüber einem unbeabsichtigten Lösen der Platte aus dem Rahmen auf.

Ein Möbelstück nach Anspruch 11 ist stabil, weist eine sicher in den Rahmen eingesetzte Platte auf und erfüllt hohe Ansprüche hinsichtlich der ästhetischen Gestaltung, da die Befestigungs-Elemente der eingesetzten Plattenbefestigung nicht sichtbar sind. Dadurch, dass die Platte in dem in den Rahmen eingesetzten Zustand mittels des mindestens einen Befestigungs-Elements gehalten ist, ist die Befestigung der Platte zusätzlich verbessert.

Ein Möbelstück nach einem der Ansprüche 12 oder 13 mit einer Ausführung der Stirnseite der Platte oder des Anlage-Elements weist eine verbesserte, d. h. besser gesicherte, Befestigung auf.

Bei einem Möbelstück nach Anspruch 14 sind die Konturen der Stirnseite und des Anlage-Elements derart aufeinander abgestimmt, dass in dem eingesetzten Zustand der Plattenbefestigung eine, insbesondere stufenlose, dem Profil-Element entsprechende Kontur gebildet ist. Dadurch liegt die Plattenbefestigung flächig an dem Profil-Element an, so dass die Haltekraft der Platte in dem Rahmen des Möbelstücks zusätzlich vergrößert ist. Dadurch ist es möglich, einer Belastung der Platte quer zur Plattenebene sowohl auf deren Innenseite als auch auf deren Außenseite besser standhalten zu können. Das Möbelstück weist insgesamt eine verbesserte Robustheit auf.

Zusätzliche Merkmale und Einzelheiten der Erfindung ergeben sich aus der nachfolgenden Beschreibung eines Ausführungsbeispiels an Hand der Zeichnung. Es zeigen:
- Fig. 1: eine perspektivische Explosionsdarstellung eines Möbelstücks mit mehreren erfindungsgemäßen Plattenbefestigungen,
- Fig. 2: eine vergrößerte Darstellung eines Querschnitts gemäß der Schnittlinie II-II in Fig. 1,
- Fig. 3: eine vergrößerte Darstellung eines Querschnitts gemäß der Schnittlinie III-III in Fig. 1,
- Fig. 4: eine vergrößerte Detaildarstellung gemäß Fig. 3,
- Fig. 5: eine vergrößerte perspektivische Darstellung eines Befestigungs-Elements und
- Fig. 6: eine Fig. 3 entsprechende vergrößerte Darstellung einer Platte ohne eingesetztes Befestigungs-Element.

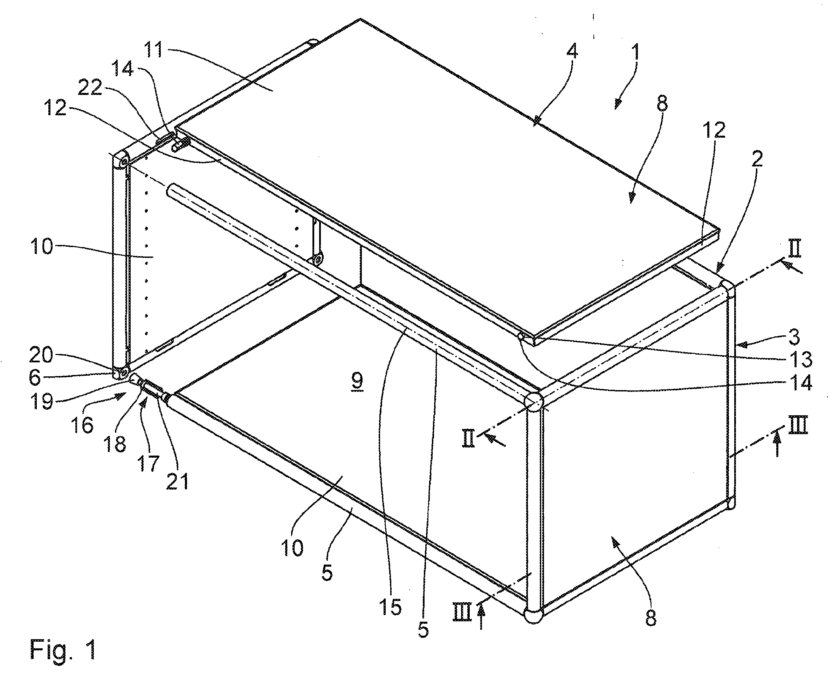

Ein in Fig. 1 dargestelltes Möbelstück 1 umfasst eine quaderförmige Rahmenstruktur 2 mit mehreren jeweils flächenhaft ausgebildeten, rechteckigen Rahmen 3 sowie eine in den Rahmen 3 einsetzbare Plattenbefestigung 4. Das Möbelstück 1 umfasst zwei bereits im Rahmen 3 eingesetzte Plattenbefestigungen 4 und eine in Fig. 1 oberhalb der Rahmenstruktur 2 dargestellte Plattenbefestigung 4, die in den entsprechenden Rahmen 3 einzusetzen ist. Je nach Gestaltungswünschen eines Verbrauchers können in das Möbelstück 1 eine oder mehrere Plattenbefestigungen eingesetzt werden.

Die Rahmenstruktur 2 kann durch Kombination einzelner Rahmen 3 und bei Variation der Rahmenformen entsprechend gestaltet werden.

Jeder Rahmen 3 umfasst mehrere Profil-Elemente in Form von Rohren 5, die über Knoten-Elemente 6 miteinander zu dem Rahmen 3 verbunden sind. Die Knoten-Elemente 6 sind derart ausgeführt, dass mehrere flächige Rahmen 3 zu der Rahmenstruktur 2, d. h. zu einem räumlichen Gebildete, verbunden sind. Die Rohre 5 weisen in dem gezeigten Ausführungsbeispiel einen kreisringförmigen Querschnitt mit einer zylindrischen Rohr-Mantelfläche 7 auf. Es ist auch möglich, dass die Rohre 5 einen ovalen oder elliptischen Hohl-Querschnitt aufweisen.

Die Plattenbefestigung 4 umfasst eine im Wesentlichen rechteckige Platte 8. Die Platte 8 weist eine einem von dem Möbelstück 1 umgebenen Innenraum 9 zugewandte Innenseite 10, eine der Innenseite 10 gegenüberliegende, dem Innenraum 9 abgewandte Außenseite 11, vier die Innenseite 10 und die Außenseite 11 miteinander verbindende Stirnseiten 12 und vier jeweils von einer Stirnseite 12 aus sich in die Platte 8 erstreckende Ausnehmungen 13 auf. Gemäß dem gezeigten Ausführungsbeispiel in Fig. 1 sind jeweils zwei der Ausnehmungen 13 an den längeren der Stirnseiten 12 benachbart zu Eckkanten mit den kürzeren Stirnseiten 12 angeordnet. Das bedeutet, dass in dem eingesetzten Zustand der Plattenbefestigung 4 in dem Rahmen 3 die Ausnehmungen 13 benachbart zu den Knoten-Elementen 6 angeordnet sind. In den Ausnehmungen 13 ist jeweils zumindest abschnittsweise ein Befestigungs-Element 14 angeordnet. In Fig. 1 sind die beiden Befestigungs-Elemente 14 an der vorderen, längeren Stirnseite 12 dargestellt. Die Befestigungs-Elemente der von dem Betrachter abgewandten Stirnseite 12 gemäß Fig. 1 sind entsprechend nicht erkennbar. Es ist auch möglich, nur ein Befestigungs-Element 14 oder mehr als zwei Befestigungs-Elemente 14 entlang einer Stirnseite 12 vorzusehen. Zwingend ist jedoch, dass mindestens ein Befestigungs-Element 14 an der Platte 8 vorgesehen ist.

Gemäß dem gezeigten Ausführungsbeispiel sind die Rahmen 3 rechteckig bzw. quadratisch ausgeführt. Es ist alternativ möglich, einen oder mehrere Rahmen 3 und entsprechend die einzusetzenden Platten 8 beispielsweise drei-, fünf-, sechs-, achteckig oder in einer beliebigen anderen Form auszuführen, die mittels einzelner durch Knoten-Elemente 6 miteinander verbundenen Rohre 5 abgebildet werden kann. Grundsätzlich sind auch nichtflächige Platten 8 und/oder nicht-polygone Rahmen 3, beispielsweise runde Rahmen 3, denkbar. Entsprechend kann eine Mittel-Längs-Achse 15 des Rohres 5 und damit das Rohr 5 selbst nicht-linear ausgebildet sein und insbesondere eine Krümmung aufweisen.

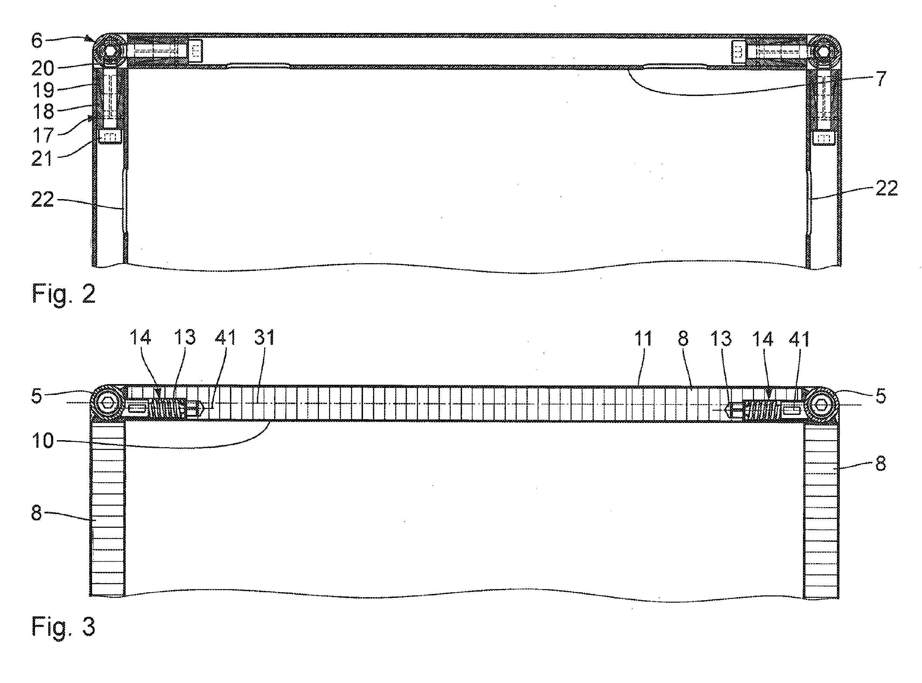

Im Folgenden wird anhand der Fig. 1 und 2 die Verbindung zwischen einem Rohr 5 und einem Knoten-Element 6 näher beschrieben. Dazu wird ein Dübel-System 16 verwendet, das eine aufweitbare Rohr-Manschette 17 mit mehreren Keil-Elementen 18, einen Keil-Einsatz 19 zum Zusammenwirken mit den Keil-Elementen 18 und eine in eine Gewindebohrung 20 des Knoten-Elements 6 einzuschraubende Befestigungs-Schraube 21 zur relativen Verlagerung der Rohr-Manschette 17 bezüglich des Keil-Einsatzes 19 entlang der Mittel-Längs-Achse 15 aufweist. Das Dübel-System 16 ist bei dem montierten Rahmen 3 innerhalb des Rohres 5 angeordnet, wie in Fig. 2 dargestellt, und ausschließlich zum besseren Verständnis in Fig. 1 in einem demontierten Zustand abgebildet. Zur Betätigung der Befestigungs-Schraube 21 weist jedes Rohr 5 mindestens eine längliche Öffnung 22 an der Rohr-Mantelfläche 7 auf, so dass die Befestigungs-Schraube 21 für ein Werkzeug zugänglich ist. Die Öffnung 22 kann dabei entweder dem Innenraum 9 zugewandt oder dem Innenraum 9 abgewandt sein. Es ist auch möglich, dass die Öffnung 22 derart groß ausgeführt ist, dass sie selbst bei der eingesetzten Platte 8 sowohl von dem Innenraum 9 aus als auch von außerhalb des Möbelstücks 1 für ein Werkzeug zugänglich ist.

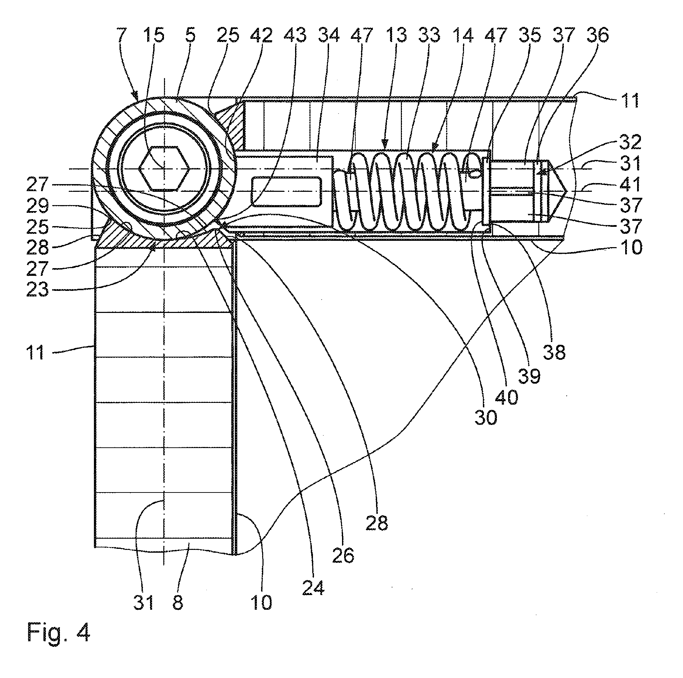

Anhand der Fig. 3 und 4 wird nachfolgend die Befestigung der Plattenbefestigung 4 mit der Platte 8 und den Befestigungs-Elementen 14 an einem Rohr 5 näher beschrieben. Die Schnittdarstellung der Fig. 3 und 4 ist in einer Schnittebene parallel zu der gemäß Fig. 2 dargestellt, wobei die Schnittebene gemäß der Fig. 3 und 4 nicht durch die Rohre 5 des Rahmens 3 sondern durch die Platten 8 verläuft. Die Stirnseiten 12 der Platte 8 weisen eine konkave Kontur 23 auf, die mit der Rohr-Mantelfläche 7 korrespondiert. Insbesondere ist die Kontur 23 der Stirnfläche 12 derart gestaltet, dass die Platte 8 mit der Stirnfläche 12 flächig an der Rohr-Mantelfläche 7 des Rohrs 5 anliegt, so dass die Platte 8 mit dem Rahmen 3 fest, aber lösbar verbunden ist. Insbesondere ist auf Grund der zylindrischen Gestaltung des Rohrs 5 und einer entsprechenden Ausprägung der Stirnseite 12 diese entlang der Rohr-Mantelfläche 7 verlagerbar, so dass die Platte 8 um die Mittel-Längs-Achse 15 des Rohrs 5 schwenkbar an dem Rohr 5 angelenkt ist.

Die Kontur 23 weist eine kreisförmige Ausprägung 24 auf, wobei die Ausprägung 24 bei anderer, beispielsweise ovaler oder elliptischer Gestaltung des Rohrs 5 entsprechend angepasst gestaltet ist. Die Ausprägung 24 ist zwischen einer äußeren Erhebung 25 und einer inneren Erhebung 26 angeordnet und durch diese begrenzt. Die Erhebung 25 weist eine innere, der Ausprägung 24 zugewandte Flanke 27 und eine äußere, der Ausprägung 24 angewandte Flanke 28 auf. Die äußere Erhebung 25 weist eine von den Flanken 27, 28 gebildete Ecke 29 auf. Das bedeutet, dass die Platte 8 entlang der Stirnfläche 12 der Außenseite 11 zugewandt eine ausgeprägte, parallel zur Mittel-Längs-Achse 15 verlaufende Kante aufweist. Dagegen ist eine Verbindungsstelle 30 der Flanken 21, 22 an der inneren Erhebung 26 abgerundet. Die äußere Erhebung 25 und die innere Erhebung 26 der Innenseite 10 der Platte 8 zugeordnet.

Jede Platte 8 weist eine Platten-Mitten-Ebene 31 auf, die mittig zwischen der Innenseite 10 und der Außenseite 11 der Platte 8 und parallel zu den Seiten 10, 11 angeordnet ist. Die Platten-Mitten-Ebenen 31 der gemeinsam an einem Rohr 5 befestigten Platten 8 schneiden sich in einer gemeinsamen Gerade, die die Mittel-Längs-Achse 15 des die beiden Platten 8 miteinander verbindenden Rohres 5 ist. Die beiden Erhebungen 25, 26 zeigen, dass die äußere Erhebung 25 parallel zu der Platten- Mitten-Ebene 31 eine größere Ausdehnung aufweist, als die innere Erhebung 26.

Wie in den Fig. 3 und 4 dargestellt, sind die Befestigungs-Elemente 14 und die dafür erforderlichen Ausnehmungen 13 jeweils in den längeren Stirnseiten 12 der Platte 8 vorgesehen. Das Befestigungs-Element 14 umfasst ein Verankerungs-Element 32, ein Feder-Element 33 und ein Anlage-Element 34. Das Verankerungs-Element 32 weist zwei beabstandet voneinander, parallel und konzentrisch zueinander angeordnete kreisförmige Scheiben 35, 36 auf, die mittels eines kreuzförmigen Verbindungsstegs 37 fest und einstückig miteinander verbunden sind. Der Verbindungssteg 37 ist zwischen den beiden Scheiben 35, 36 angeordnet und legt eine Mantelfläche des Verankerungs-Elements 32 fest, die einen Außendurchmesser aufweist, der einem Außendurchmesser der Scheibe 36 entspricht. Dagegen weist die Scheibe 35 einen vergrößerten Durchmesser auf und dient somit als Anschlag für das Verankerungs-Element 32 und damit für das Befestigungs-Element 14 in der Ausnehmung 13. Entsprechend liegt die Scheibe 35 mit einer Unterseite 38 an einem Absatz 39 der Ausnehmung 13 an. Das Verankerungs-Element 32 ist aus Kunststoff hergestellt.

Benachbart zu der Scheibe 35, d. h. an einer der Unterseite 38 abgewandten Oberseite 40 der Scheibe 35, ist ein Feder-Element 33 in Form einer Spiralfeder aus Metal vorgesehen. Das Feder-Element 33 ermöglicht eine Kompression und Entspannung derart, dass eine Verlagerung des Feder-Elements 33 und damit des Befestigungs-Elements 14 parallel zur Platten-Mitten-Ebene 31 erfolgen kann. An einem dem Verankerungs-Element 32 zugewandten Ende gegenüberliegenden Ende des Feder-Elements 33 ist das Anlage-Element 34 angeordnet. Das Anlage-Element 34 ist ebenfalls aus Kunststoff hergestellt und weist eine Länge entlang einer Längsachse 41 der Ausnehmung 13 derart auf, dass in einem eingesetzten Zustand der Plattenbefestigung 4 in dem Rahmen 3 das Anlage-Element 34 und damit das Befestigungs-Element 14 zumindest abschnittsweise an der Stirnseite 12 aus der Platte 8 hinausragen.

In dem in Fig. 4 gezeigten montierten Zustand der Platte 8 ist das Feder-Element 33 belastet, d. h. derart zusammengedrückt, dass das Feder-Element 33 eine Expansions-Federkraft sowohl auf das Verankerungs-Element 32 als auch auf das Anlage-Element 34 und damit auf das Rohr 5 ausübt. Dadurch ist das Verankerungs-Element 32 zusätzlich in der Ausnehmung 13 gehalten und wird insbesondere mit der Unterseite 38 der Scheibe 35 gegen den Absatz 39 gedrückt. Das Anlage-Element 34 wird mit einer der Rohr-Mantelfläche 7 entsprechenden Kontur 42 gegen das Rohr 5 gedrückt. Dadurch, dass mehrere Befestigungs-Elemente jeweils gegenüberliegenden Stirnseiten 12 der Platte 8 vorgesehen sind, ist die Plattenbefestigung 4 in dem in den Rahmen 3 eingesetzten und in den Fig. 3 und 4 dargestellten Zustand zwischen zwei gegenüberliegenden Rohren 5 des Rahmens 3 zusätzlich eingespannt. In dem eingesetzten Zustand gemäß Fig. 4 ragt das Befestigungs-Element 14 derart aus der Ausnehmung 13 heraus und weist die Kontur 42 derart auf, dass die Konturen 23 und 42 der Stirnfläche 12 bzw. des Anlage-Elements 34 eine gemeinsame, insbesondere konkave Kontur zum Anlegen an die Rohr-Mantelfläche 7 bilden. Die gemeinsame Kontur 23, 42 ist abschnittsweise kreisförmig gestaltet und umfasst neben der äußeren Erhebung 25 eine zusätzliche innere Erhebung 43 des Anlage-Elements 34, die parallel zur Platten-Mitten-Ebene 31 eine im Wesentlichen gleichgroße Ausdehnung aufweist wie die äußere Erhebung 25. Die äußere Erhebung 25 stabilisiert die Platte 8 gegen eine Belastung des Möbelstücks 1 auf die Außenseite 11 der Platte 8. Entsprechend sichert die innere Erhebung 43 des Anlage-Elements 34 die Platte 8 gegen unbeabsichtigtes Lösen aus dem Rahmen 3 bei einer Betätigung bzw. Beanspruchung der Platte 8 mit einer Kraft auf die Innenseite 10 der Platte 8. Das Befestigungs-Element 14 bewirkt also neben der axialen Verspannung parallel zur Platten-Mitten-Ebene 31 zudem eine verbesserte Halterung an dem Rohr 5 senkrecht zur Platten-Mitten-Ebene 31.

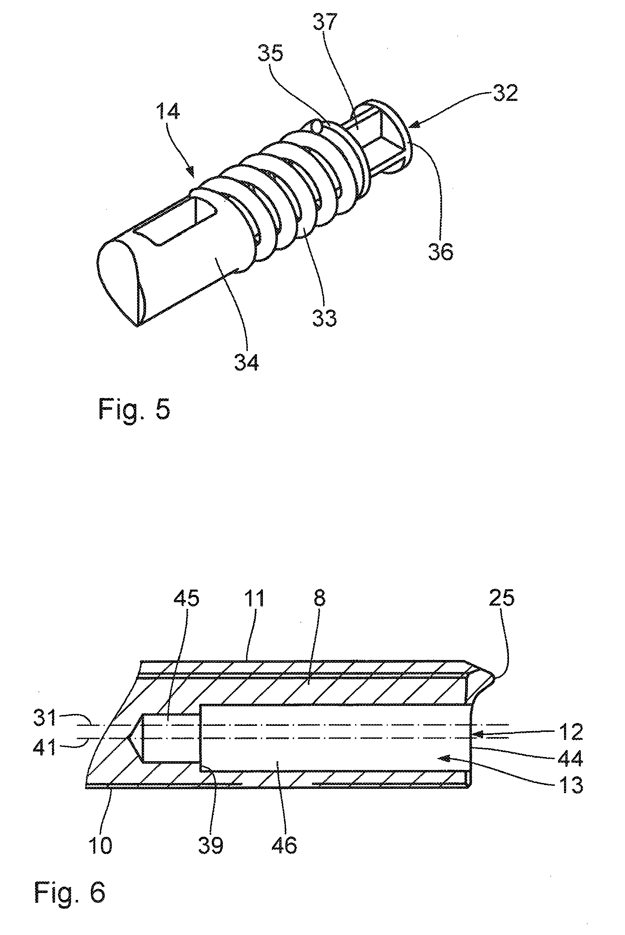

Im Folgenden wird an Hand der Fig. 6 die Gestaltung der Ausnehmung 13 näher beschrieben. Entsprechend zeigt Fig. 6 einen vergrößerten Detailausschnitt der Platte 8 gemäß Fig. 4, wobei in die Ausnehmung 13 kein Befestigungs-Element 14 eingesetzt ist. Wie insbesondere aus Fig. 6 deutlich wird, ist die Ausnehmung 13 derart in der Platte 8 angeordnet, dass die Längsachse 41 der Ausnehmung 13 parallel zu der Platten-Mitten-Ebene 31 verläuft. Weiterhin ist die Längsachse 41 beabstandet von der Platten-Mitten-Ebene 31 und der Innenseite 10 der Platte 8 zugewandt angeordnet. Infolge dieser Anordnung der Ausnehmung 13 und der Ausführung der Kontur 42 des Befestigungs-Elements ist es möglich, dass die Konturen 23, 42 eine gemeinsame Kontur bilden. Die Ausnehmung 13 ist als eine Sacklochbohrung ausgeführt, die den Absatz 39 aufweist. Durch den Absatz 39 ist die Ausnehmung 13 in einen einer Ausnehmungsöffnung 44 abgewandten Verankerungs-Abschnitt 45 und einen der Ausnehmungsöffnung 44 zugewandten Verlagerungs-Abschnitt 46 getrennt.

Der Verankerungs-Abschnitt 45 dient zur verankernden Aufnahme des Befestigungs-Elements 14 mit dem Verankerungs-Element 32. Der Verankerungs-Abschnitt 45 ist als Passbohrung derart ausgeführt, dass das Verankerungs-Element 32 darin derart eingepasst werden kann, so dass das Befestigungs-Element 14 sicher in der Ausnehmung 13 befestigt und gehalten ist. Der Verlagerungs-Abschnitt 46 weist einen Innendurchmesser auf, der gegenüber dem Innendurchmesser des Verankerungs-Abschnitts 45 vergrößert ist. Dies ist deshalb erforderlich, da wie beispielsweise in Fig. 4 gezeigt, dass Feder-Element 33 einen gegenüber dem Verankerungs-Element 32 vergrößerten Außendurchmesser aufweist. Der Außendurchmesser des Feder-Elements 33 ist kleiner als der Innendurchmesser des Verlagerungs-Abschnitts 46, so dass bei Kompression bzw. Entspannung des Feder-Elements 33 eine Verlagerung des Feder-Elements 33 und des Anlage-Elements 34 entlang der Längsachse 41 in der Ausnehmung 13 möglich ist. Es ist auch möglich, Zapfen 47 des Verankerungs-Elements 32 und/oder des Anlage-Elements 34 und das Feder-Element 33 derart zu gestalten, dass der Außendurchmesser des Feder-Elements 33 kleiner ist als der Außendurchmesser des Verankerungs-Elements 32. In einem derartigen Fall kann die Ausnehmung 13 als Bohrung mit einem im Wesentlichen einheitlichen Innendurchmesser ausgeführt sein, wobei auch der Verlagerungs-Abschnitt 46 als Passbohrung ausgeführt sein könnte.

Wie in Fig. 4 dargestellt, weist das Anlage-Element 34 einen gegenüber dem Feder-Element 33 reduzierten Durchmesser auf. Es ist auch möglich, das Anlage-Element 34 mit einem innerhalb der Ausnehmung 13 angeordneten Abschnitt mit einem Außendurchmesser derart auszuführen, dass die Verlagerung des Befestigungs-Elements 14 in der Ausnehmung 13 geführt ist. In diesem Fall weist das Anlage-Element ein Führungs-Element auf, dem ein korrespondierender Führungs-Abschnitt der Ausnehmung 13 zugeordnet ist. Je nach Ausführung des Führungselements kann der Innendurchmesser des Führungs-Abschnitts gegenüber dem des Verlagerungs-Abschnitts 46 zusätzlich vergrößert sein, so dass die Ausnehmung als mehrstufige Bohrung ausgeführt ist.

Das Befestigungs-Element ist mehrteilig ausgeführt, wobei das Feder-Element 33 zwischen dem Verankerungs-Element 32 und dem Anlage-Element 34 angeordnet ist. Das Verankerungs-Element 32 und das Anlage-Element 34 weisen jeweils den Zapfen 47 auf, der jeweils in einen von der Spirale des Feder-Elements 33 umgebenen Hohlraum hineinragt, um die Elemente 32, 33, 34 des Befestigungs-Elements 14 miteinander zu verbinden. Es ist auch denkbar, dass die Zapfen 47 als Stege derart ausgebildet sind, dass das Verankerungs-Element 32 und das Anlage-Element 34 miteinander derart verbindbar sind, dass das Feder-Element 33 dazwischen angeordnet ist und gleichzeitig eine Verlagerung der Elemente 32, 34 zueinander ermöglicht ist.

Im Folgenden werden die Betätigung des Dübel-Systems 16 und damit die Befestigung eines Rohres 5 an einem Knoten-Element 6 näher beschrieben. Ausgehend von dem oben geschilderten, nicht arretierenden Zustand des Dübel-Systems 16, erfolgt durch Einschrauben der Befestigungs-Schraube 21 eine axiale Verstell-Bewegung derselben entlang der Mittel-Längs-Achse 15. In Folge dessen wird ein Schraubkopf der Befestigungs-Schraube 21 gemäß Fig. 1 nach links oben in Richtung des Knoten-Elements 6 verlagert. Dadurch, dass eine Querschnittsfläche des Schraubenkopfes größer ist als eine Öffnung der Rohr-Manschette 17, nimmt die Befestigungs-Schraube 21 die Rohr-Manschette 17 nach links oben in Richtung des Knoten-Elements 6 mit. Sobald Innen-Konusflächen der Keil-Elemente 18 an Außen-Konusfläche des Keil-Einsatzes 19 anliegen, entsteht eine Reibverbindung zwischen dem Keil-Einsatz 19 und den Keil-Elementen 18 der Rohr-Manschette 17, sodass das Dübel-System 16 fest mit dem Knoten-Element 6 verbunden ist. Gleichzeitig werden durch das Einschrauben der Befestigungs-Schraube 21 die einzeln an einem BasisAbschnitt der Rohr-Manschette 17 angebrachten Keil-Elemente 18 durch den Keil-Einsatz 19 radial nach außen und mit einer Außenseite gegen eine Innenwand des Rohres 5 gedrückt. Somit liegt zwischen der Rohr-Manschette 17 und dem Rohr 5 eine flächige Reibverbindung vor, sodass das Dübel-System 16 weiterhin fest mit dem Rohr 5 verbunden ist. Somit dient das Dübel-System 16 zur festen Verbindung des Rohres 5 mit dem Knoten-Element 6 zur Herstellung des Rahmens 3.

Anhand der Figuren 1, 3 und 4 wird die Anwendung des erfindungsgemäßen Inneneinrichtungssystems geschildert. Ausgehend von dem bereits montierten Rahmen 3 wird die Platte 8 zunächst mit einer Stirnseite 12 auf das Rohr 5 des Rahmens 3 aufgesetzt. Aufgrund der zu der Rohr-Mantelfläche 7 des Rohres 5 korrespondierenden Gestaltung der Kontur 23 der Stirnseite 12 ist die Platte 8 um die Mittel-Längs-Achse 15 des Rohrs 5 schwenkbar und wird zum Einsetzen in den Rahmen 3 in einer Schwenkrichtung zu dem Rahmen 3 hin geschwenkt. Dabei ist es vorteilhaft, dass die innere Erhebung 26 an der Verbindungsstelle 30 abgerundet ist und keine Ecke aufweist, denn dadurch ist das Aufsetzen der Platte 8 auf das Rohr 5 und das anschließende Verschwenken um die Mittel-Längs-Achse 15 erleichtert.

Insbesondere wird durch die abgerundete Gestaltung der Verbindungsstelle 30 das anschließende Eindrücken der Platte 8 in den Rahmen 3 erleichtert. Durch die Schwenkbewegungen in Schwenkrichtung kommt die Platte 8 mit der Verbindungsstelle 30 an der Rohr-Mantelfläche 7 des in Fig. 4 oben dargestellten Rohres 5 zum Anliegen. Durch leichten Druck auf die Platte 8 in Schwenkrichtung kann die Platte 8 in den Rahmen 3 eingedrückt werden.

Beim Aufsetzen der Platte 8 mit der Stirnfläche 12 auf die Rohr-Mantelfläche 7 werden die diesem Rohr 5 zugewandten Befestigungs-Elemente 14 durch Kompression des Feder-Elements 33 in die Ausnehmung 13 soweit hingedrückt, dass die Stirnfläche 12 und das Anlage-Element 34 des Befestigungs-Elements 14 eine gemeinsame Kontur 23, 42 bilden. Das Befestigungs-Element 14 ist in der Ausnehmung 13 insbesondere drehbar um die Längsachse 41 angeordnet. Für den Fall, dass das Befestigungs-Element 14 derart in der Ausnehmung 13 angeordnet ist, dass die Konturen 23 und 42 der Stirnfläche 12 und des Anlage-Elements 34 keine gemeinsame Kontur ausbilden, wird die Ausrichtung des Befestigungs-Elements 14 mit dem Anlage-Element 34 selbsttätig dadurch erreicht, dass das Anlage-Element 34 an dem Rohr 5 anliegt. Das Befestigungs-Element 14 ist insbesondere selbst-ausrichtend in der Ausnehmung 13 angeordnet. Nachdem die Platte 8 um die Mittel-Längs-Achse 15 des Rohrs 5 eingeschwenkt worden ist, wird die Platte 8 mit der an der Rohr-Mantelfläche 7 angeordneten Stirnfläche 12 gegenüberliegenden Stirnfläche 12 an dem entsprechenden Rohr 5 angeordnet, in dem die jeweiligen Befestigungs-Elemente 14 durch Anliegen an dem Rohr 5 in Folge der Elastizität des Feder-Elements 13 in die Ausnehmung 13 eingedrückt werden. Wenn die Platte 8 in dem Rahmen 3 abschließend montiert ist, entspannen die Feder-Elemente 33 und bewirken eine Druckkraft auf die beiden gegenüberliegend angeordneten Rohre 5, so dass die Plattenbefestigung 4 in dem Rahmen 3 zusätzlich gehalten und damit gesichert ist.

In dem eingesetzten Zustand der Platte 8 in dem Möbelstück 1 gemäß Fig. 3 dient insbesondere die von der Ecke 29 gebildete obere Kante der Stirnfläche 12 für ein ansprechendes Erscheinungsbild und eine ästhetische Wahrnehmung des Möbelstücks 1. Bei einem Betrachter suggeriert der fließende Übergang von der Platte 8 über die obere Kante, die aufgrund ihrer gegenüber der Plattenoberfläche zurückgesetzten Anordnung als Kante nicht deutlich wahrgenommen wird, auf den Rahmen 3 eine geschlossene Möbel-Oberfläche und damit ein einteiliges Möbelstück 1.

Für den Fall, dass sämtliche Seitenflächen des Möbelstücks 1 mit Platten 8 versehen sind und somit ein geschlossener Körper vorliegt, erfolgt die Demontage des Möbelstücks 1 dadurch, dass durch Lösen der Befestigungs-Schraube 21 der Rahmen 3 demontiert wird und somit die Platten 8 entnommen werden können. Für den Fall, dass in mindestens eine Seitenfläche keine Platte 8 eingesetzt worden ist, können alle weiteren Platten 8 von dem von dem Möbelstück 1 umschlossenen Innenraum 9 aus nach außen gedrückt werden. Dabei ist insbesondere die abgerundete Gestaltung der Verbindungsstelle 30 vorteilhaft, die das Herausdrücken der in dem Rahmen 3 gehaltenen Platte 8 begünstigt, wobei die Platte 8 aufgrund des flächigen Kontakts zwischen der Stirnfläche 12 und der Rohr-Mantelfläche 7 fest in dem Rahmen 3 gehalten ist. Diese Montage und Demontage des erfindungsgemäßen Möbelstücks ist besonders schnell, einfach und damit kostengünstig durchführbar.

## Patentansprüche

1. Plattenbefestigung für ein Möbelstück, umfassend
a. eine Platte (8) mit
i. einer Innenseite (10),
ii. einer der Innenseite (10) gegenüberliegenden Außenseite (11),
iii. mindestens einer die Innenseite (10) und die Außenseite (11) verbindenden Stirnseite (12), die eine konkave Kontur (23) aufweist, und
iv. mindestens einer von der mindestens einen Stirnseite (12) sich in die Platte (8) erstreckenden Ausnehmung (13) und
b. mindestens ein zumindest abschnittsweise innerhalb der mindestens einen Ausnehmung (13) anordenbares Befestigungs-Element (14),
wobei das mindestens eine Befestigungs-Element (14) ein Anlage-Element (34) zum flächigen Anliegen an dem Möbelstück (1) aufweist, wobei das Anlage-Element (34) eine Kontur (42) aufweist, **dadurch gekennzeichnet, dass** das in die Ausnehmung (13) eingesetzte Befestigungs-Element (14) und die Stirnseite (12) eine gemeinsame konkave Kontur (23, 42) zum Anlegen an eine Rohr-Mantelfläche (7) bilden.

2. Plattenbefestigung gemäß Anspruch 1, **dadurch gekennzeichnet, dass** das mindestens eine Befestigungs-Element (14) ein Feder-Element (33), insbesondere eine Spiralfeder, aufweist.

3. Plattenbefestigung gemäß Anspruch 2, **dadurch gekennzeichnet, dass** das Befestigungs-Element (14) in einem unbelasteten Zustand des Feder-Elements (33) zumindest abschnittsweise außerhalb der mindestens einen Ausnehmung (13) angeordnet ist.

4. Plattenbefestigung gemäß einem der vorangehenden Ansprüche, **dadurch gekennzeichnet, dass** das mindestens eine Befestigungs-Element (14) ein Verankerungs-Element (32) zur Verankerung in der mindestens einen Ausnehmung (13) aufweist.

5. Plattenbefestigung gemäß einem der vorangehenden Ansprüche, **gekennzeichnet durch** ein mehrteiliges Befestigungs-Element (14).

6. Plattenbefestigung gemäß einem der vorangehenden Ansprüche, **dadurch gekennzeichnet, dass** die mindestens eine Ausnehmung (13) einen Verankerungs-Abschnitt (45) zur verankernden Aufnahme des mindestens einen Befestigungs-Elements (14), insbesondere des Verankerungs-Elements (32), aufweist.

7. Plattenbefestigung gemäß Anspruch 6, **gekennzeichnet durch** eine Passbohrung als Verankerungs-Abschnitt (45).

8. Plattenbefestigung gemäß einem der vorangehenden Ansprüche, **dadurch gekennzeichnet, dass** die mindestens eine Ausnehmung (13) einen Verlagerungs-Abschnitt (46) zur zumindest teilweisen Verlagerung des mindestens einen Befestigungs-Elements (14), insbesondere des Feder-Elements (33) und/oder des Anlage-Elements (34), innerhalb der Ausnehmung (13) aufweist.

9. Plattenbefestiging gemäß einem der vorangehenden Ansprüche, **dadurch gekennzeichnet, dass** eine Längsachse (41) der mindestens einen Ausnehmung (13) beabstandet und insbesondere parallel zu einer mittig zwischen der Innenseite (10) und der Außenseite (11) angeordneten Platten-Mitten-Ebene (31) angeordnet ist.

10. Plattenbefestigung gemäß Anspruch 9, **gekennzeichnet durch** eine Anordnung der Längsachse (41) zwischen der Platten-Mitten-Ebene (31) und der Innenseite (10).

11. Möbelstück, umfassend
a. einen Rahmen (3) mit
i. mehreren Profil-Elementen, insbesondere Rohren (5), und
ii. mehreren die Profil-Elemente miteinander verbindende KnotenElemente (6),
b. mindestens eine in den Rahmen (3) einsetzbare Plattenbefestigung gemäß einem der vorangehenden Ansprüche.

12. Möbelstück gemäß Anspruch 11, **gekennzeichnet durch** eine an die Profil-Elemente angepasste, insbesondere konkave, Kontur (23) der mindestens einen Stirnseite (12).

13. Möbelstück gemäß einem der Ansprüche 11 oder 12, **gekennzeichnet durch** eine an die Profil-Elemente angepasste, insbesondere konkave, Kontur (42) des Anlage-Elements (34).

14. Möbelstück gemäß den Ansprüchen 12 und 13, **dadurch gekennzeichnet, dass** die Stirnseite (12) und das Anlage-Element (34) in dem eingesetzten Zustand der Plattenbefestigung (4) eine gemeinsame, insbesondere konkave, Kontur (23, 42) zum Anliegen an dem Profil-Element (5) aufweisen.

## Claims

1. Panel fixing for furniture comprising
a. a panel (8) with
i. an inner side (10),
ii. an outer side (11) opposite the inner side (10),
ii. at least one end face (12) connecting the inner side (10) and the outer side (11), which end face has a concave contour (23) and
iv. at least one recess (13) extending from the at least one end face (12) into the panel (8) and
b. at least one fastening element (14) which can be arranged at least in sections inside the at least one recess (13),
wherein the at least one fastening element (14) comprises a bearing element (34) for bearing flat against the furniture (1), wherein the bearing element (34) has a contour (42),
**characterised in that** the fastening element (14) inserted into the recess (13) and the end face (12) form a common concave contour (23, 42) for bearing against a tubular casing surface (7).

2. Panel fixing according to claim 1, **characterised in that** the at least one fastening element (14) comprises a spring element (33), in particular a helical spring.

3. Panel fixing according to claim 2, **characterised in that** the fastening element (14) is arranged in an unloaded state of the spring element (33) at least in sections outside the at least one recess (13).

4. Panel fixing according to one of the preceding claims, **characterised in that** the at least one fastening element (14) comprises an anchoring element (32) for anchoring in the at least one recess (13).

5. Panel fixing according to one of the preceding claims, **characterised by** a multipart fastening element (14).

6. Panel fixing according to one of the preceding claims, **characterised in that** the at least one recess (13) comprises an anchoring section (45) for anchoring the at least one fastening element (14), in particular the anchoring element (32).

7. Panel fixing according to claim 6, **characterised by** a fitting bore as the anchoring section (45).

8. Panel fixing according to one of the preceding claims, **characterised in that** the at least one recess (13) comprises a displacement section (46) for the at least partial displacement of the at least one fastening element (14), in particular the spring element (33) and/or the bearing element (34), inside the recess (13).

9. Panel fixing according to one of the preceding claims, **characterised in that** a longitudinal axis (41) of the at least one recess (13) is arranged spaced apart from and in particular parallel to a panel middle plane (31) arranged centrally between the inner side (10) and the outer side (11).

10. Panel fixing according to claim 9, **characterised by** an arrangement of the longitudinal axis (41) between the panel middle plane (31) and the inner side (10).

11. Furniture comprising
a. a frame (3) with
i. a plurality of profile elements, in particular tubes (5) and
ii. a plurality of joint elements (6) connecting together the profile elements,
b. at least one panel fixing insertable into the frame (3) according to one of the preceding claims.

12. Furniture according to claim 11, **characterised by** a contour (23) of the at least one end face (12), which contour is adapted to the profile elements and is in particular concave.

13. Furniture according to one of claims 11 or 12, **characterised by** a contour (42) of the bearing element (34), which contour is adapted to the profile elements and is in particular concave.

14. Furniture according to claims 12 and 13, **characterised in that** the end face (12) and the bearing element (34) in the inserted position of the panel fixing (4) have a common, in particular concave contour (23, 42) for bearing against the profile element (5).

## Revendications

1. Fixation de plaques pour un meuble comprenant
a. une plaque (8) comportant
i. une face interne (10),
ii. une face externe (11) située en face de la face interne (10),
iii. au moins une face frontale (12), qui présente un contour (23) concave, reliant la face interne (10) et la face externe (11), et
iv. au moins un évidement (13) s'étendant dans la plaque (8) au moins à partir de la face frontale (12), et
b. au moins un élément de fixation (14) pouvant être disposé au moins partiellement à l'intérieur d'au moins un évidement (13)
**caractérisée en ce**
**qu'**au moins un élément de fixation (14) présente un élément d'appui (34) pour une position à plat adjacente sur le meuble (1), l'élément d'appui (34) présentant un contour (42), l'élément de fixation (14) inséré dans l'évidement (13) et la face frontale (12) formant un contour (23, 42) commun, concave, pour un appui contre la surface d'enveloppe du tuyau (7).

2. Fixation de plaques selon la revendication 1 **caractérisée en ce qu'**au moins un élément de fixation (14) présente un élément ressort (33), en particulier, un ressort en spirale.

3. Fixation de plaques selon la revendication 2 **caractérisée en ce que** l'élément de fixation (14) est disposé dans un état non contraint de l'élément ressort (33) au moins partiellement en dehors de l'au moins un évidement (13).

4. Fixation de plaques selon l'une des revendications précédentes **caractérisée en ce qu'**au moins un élément de fixation (14) présente un élément d'ancrage (32) pour l'ancrage dans au moins un évidement (13).

5. Fixation de plaques selon l'une des revendications précédentes **caractérisée par** un élément de fixation (14) en plusieurs parties.

6. Fixation de plaques selon l'une des revendications précédentes **caractérisée en ce qu'**au moins un évidement (13) présente une portion d'ancrage (45) pour l'admission par ancrage d'au moins un élément de fixation (14), en particulier, de l'élément d'ancrage (32).

7. Fixation de plaques selon la revendication 6 **caractérisée par** un alésage de positionnement servant de portion d'ancrage (45).

8. Fixation de plaques selon l'une des revendications précédentes **caractérisée en ce qu'**au moins un évidement (13) présente une portion de déplacement (46) pour au moins un déplacement au moins partiel d'au moins un élément de fixation (14), en particulier, de l'élément ressort (33) et/ou de l'élément d'appui (34) à l'intérieur de l'évidement (13).

9. Fixation de plaques selon l'une des revendications précédentes **caractérisée en ce qu'**un axe longitudinal (41) de l'au moins un évidement (13) est agencé, espacé, et, en particulier, parallèlement à un plan médian de la plaque (31), disposé au centre entre la face interne (10) et la face externe (11).

10. Fixation de plaques selon la revendication 9 **caractérisée par** une disposition de l'axe longitudinal (41) entre le plan médian de la plaque (31) et la face interne (10).

11. Meuble comprenant
a. un cadre (3) comportant
i. plusieurs éléments profilés, en particulier, des tuyaux (5) et
ii. plusieurs éléments de jonction (6) reliant les éléments profilés entre eux,
b. au moins une fixation de plaques selon l'une des revendications précédentes, pouvant être insérée dans le cadre (3).

12. Meuble selon la revendication 11 **caractérisé par** un contour (23), en particulier, concave, d'au moins une face frontale (12), adapté aux éléments profilés.

13. Meuble selon l'une des revendications 12 ou 13 **caractérisé par** un contour (42), en particulier concave, de l'élément d'appui (34), adapté aux éléments profilés.

14. Meuble selon les revendications 12 et 13 **caractérisé en ce que** la face frontale (12) et l'élément d'appui (34) présentent un contour (23, 42), en particulier concave, commun dans la position insérée de la fixation de plaque (4), pour une position à plat adjacente à l'élément profilé (5).
